(19) Europäisches Patentamt
European Patent Office
Office européen des brevets

(11) **EP 2 023 495 B1**

(12) **EUROPEAN PATENT SPECIFICATION**

(45) Date of publication and mention
of the grant of the patent:
**29.05.2013 Bulletin 2013/22**

(51) Int Cl.:
***H04B 1/7103*** *(2011.01)*

(21) Application number: **07711059.1**

(22) Date of filing: **07.03.2007**

(86) International application number:
**PCT/CN2007/000738**

(87) International publication number:
**WO 2007/128187 (15.11.2007 Gazette 2007/46)**

(54) **A MULTI- ANTENNAE MULTIPLEXING INTERPOLATION DEVICE**

MULTIPLEXENDE INTERPOLATIONSEINRICHTUNG MIT MEHREREN ANTENNEN

DISPOSITIF D'INTERPOLATION À MULTIPLEXAGE MULTI-ANTENNE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **08.05.2006 CN 200610078807**

(43) Date of publication of application:
**11.02.2009 Bulletin 2009/07**

(73) Proprietor: **ZTE Corporation Shenzhen, Guangdong 518057 (CN)**

(72) Inventor: **GU, Yantao**
**Shenzhen, Guangdong 518057 (CN)**

(74) Representative: **Bergmeier, Werner et al**
**Canzler & Bergmeier**
**Friedrich-Ebert-Straße 84**
**85055 Ingolstadt (DE)**

(56) References cited:
**EP-A2- 1 065 794**          **CN-A- 1 376 333**
**DE-C1- 19 741 991**          **US-A- 6 157 937**
**US-A1- 2003 002 542**          **US-A1- 2004 056 785**

**Description**

**Technical Field of the Invention**

The present invention relates to a multiple-antennae multiplexing interpolation device, especially to a multiple-antennae multiplexing interpolator hardware device with improved antennae sample accuracy.

**Technical Background of the Invention**

In prior art, the RAKE receiver is a well-developed baseband processing technique in the current WCDMA Node B baseband processing system, and the baseband antennae interface of the front end of RAKE receiver is required to transmit antennae sample data of high accuracy to the RAKE receiver in order to meet the requirement for the baseband processing performance in WCDMA communication system.

For this purpose, the requirement for various performances like sampling rate, buffering depth of the baseband antennae port processing logical should be greatly increased. Currently, the accuracy of the antennae sample which is transmitted from baseband antennae port to the RAKE receiver is only of twice-chips, i.e., the baseband antennae interface collect 2 antennae samples during each chip period, and it is far away from the requirement for the accuracy of 8 times-chips that the RAKE receiver needs.

In order to solve the problem, the sample with the accuracy of twice-chips needs to be converted to the sample with the accuracy of 8 times-chips through the multiple-antennae multiplexing interpolator at the front end of the RAKE receiver.

Now the domestic patent about the interpolator is limited to the application of the modem in respect to data collecting with high speed, video signal processing, speed adjusting at filter front end, etc.. For example, in the Chinese patent CN 1376333 of Marconi Communication Ltd., first, the signals are extracted by an extractor to reduce the sampling rate of the input signal, then a central filter is used to filter the extracted samples, finally, the filtered signal is recovered by an interpolator. Known from the principle of this device, the accuracy of the output samples does not change substantially in respect to the accuracy of the input samples, and it does not satisfy the requirement that the accuracy of the antennae samples is increased by the interpolation of the multiple-antennae multiplexing data stream in WCDMA baseband processing system and the format conversion of the sample data stream format and the antennae demultiplexing and are completed meanwhile.

Therefore, the prior art has limitation and needs to be improved and developed.

**Summary of the Invention**

The purpose of the present invention is to provide a multiple-antennae multiplexing interpolation device, on the basis of the feature of antennae sample collection in WCDMA baseband system, a multiple-antennae multiplexing interpolator implementation circuit for increasing antennae sample accuracy is proposed, in which the multiple-antennae multiplexing data stream with the accuracy of twice-chips is successfully converted into the sample data stream with the accuracy of 8 times-chips that the RAKE receiver requires without adding the requirement for the baseband antennae port data collection, meanwhile, the format conversion of the sample data stream and the antennae demultiplexing will be completed automatically during the interpolation, satisfying the requirement of the RAKE receiver for the antennae data stream format.

The technical scheme of the present invention includes:

A multiple-antennae multiplexing interpolation device, which is connected between the WCDMA baseband antennae interface and the RAKE receiver, wherein 4 function units are included: a data buffer unit, an integration RAM unit, a shift integration register group, and an interpolation unit; wherein:

Said data buffer unit is used to buffer the multiple-antennae multiplexing data stream of the antennae interface, decompose the multiple-antennae multiplexing data stream into the single antennae data streams under the control of the 1/2 chip synchronization signal and the chip synchronization signal input from outside, and output the single antennae data stream to the R port of the shift integration register group, wherein the data stream is multiple samples collected by single antennae during one chip period;

Said integration RAM unit is used to buffer the antennae samples collected by each antennae during several chip periods in its inner RAM at the different addresses in term of the number of antennae under the control of chip synchronization signal, and help the shift integration register group to complete the shift operation;

Said shift integration register group is used to receive multiple antennae samples collected by the single antennae during one chip period output by said data buffer unit in current chip period, and piece said multiple antennae samples together with the antennae samples collected during several previous chip periods by this single antennae buffered in the integration RAM unit;

Said interpolation unit is used to interpolate the antennae samples collected by the single antennae to get the specified accuracy according to WCDMA baseband interpolation algorithm so as to satisfy the requirement of the back end RAKE receiver for the accuracy of the input sample data.

In said device, said data buffer unit gathers the individual antennae samples collected by each antennae during one chip period to send to said shift integration register group to piece these antennae samples together;

The input of said integration RAM unit is connected to the B port output of said shift integration register group, while the output of said integration RAM unit is connected to the I port input of said shift integration register group;

The input of said interpolation unit is connected to the A port output of said shift integration register group; the output of said interpolation unit is connected to the input of said RAKE receiver.

In said device, said data buffer unit is used for antennae demultiplexing, including a first data buffer, a second data buffer, a first read/writing control signal generator, an antennae number counter, and a selector, wherein:

The first data buffer and the second data buffer consist of two separate double-port RAMs respectively, B port of each RAM is only for reading and A port is only for writing;

The first read/writing control signal generator is used to control the read/writing operation of the first data buffer and the second data buffer;

The antennae number counter is used to be reset as zero and to be rolled over with the clock being the period once the chip synchronization signal is detected to be valid;

The selector is used to, according to the counting result of the antennae number counter, select all samples sampled by the single antennae during one chip period from the multiple-antenna multiplexing data stream read from the first data buffer and the second data buffer, and piece them together to output.

In said device, the width of the RAM is of 32 bits, the depth is of 16 bits, wherein the lower 8 address units form an L area, and the higher 8 address units form an H area.

In the present invention, a multiple-antennae multiplexing interpolation device is provided, since the antennae sample data are processed in real time in the present invention, the strict performance requirement for the sampling rate at the baseband antennae interface to satisfy the requirement of the RAKE receiver for the sample accuracy is avoided, and it is avoided that a large amount of storage is consumed by the baseband antennae interface to buffer the data, and thus a large amount of storage resources are saved.

## Brief Description of the Drawings

Fig. 1 is a schematic diagram of the way of antennae multiplexing output of the baseband antennae interface in the embodiment of the invention;

Fig. 2 is the structure block diagram of the multiple-antenna multiplexing interpolation device in the embodiment of the invention;

Fig. 3 is a sequence chart of the input signals of the antennae multiplexing interpolation device in the embodiment of the invention;

Fig. 4 is a sequence chart of the output signals of the antennae multiplexing interpolation device in the embodiment of the invention;

Fig. 5 is the hardware implementation block diagram of the antennae unit in the embodiment of the invention;

Fig. 6 is the structure block diagram of the antennae buffer RAM in the embodiment of the invention;

Fig. 7 is the hardware implementation block diagram of the integration RAM unit in the embodiment of the invention;

Fig. 8 is the hardware implementation block diagram of the shift integration register group in the embodiment of the invention;

Fig. 9 is the hardware implementation block diagram of the interpolation unit in the embodiment of the invention;

Fig. 10 is the hardware implementation block diagram of the interpolation calculation unit in the embodiment of the invention;

Fig. 11 is the hardware implementation block diagram of the multiplication/addition unit in the embodiment of the invention.

## Description of the Preferred Embodiment

In the following, the preferred embodiment of the present invention will be described in detail with reference to the accompanying figures.

The data stream transmitted by the multiple-antenna multiplexing interpolation device of present invention to the RAKE receiver at WCDMA baseband antennae interface is a set of multiplexed multiple-antenna data streams, that is to say, the sampling points of the multiple antennas are combined at the antennae interface during each time clock period to transmit to the RAKE receiver.

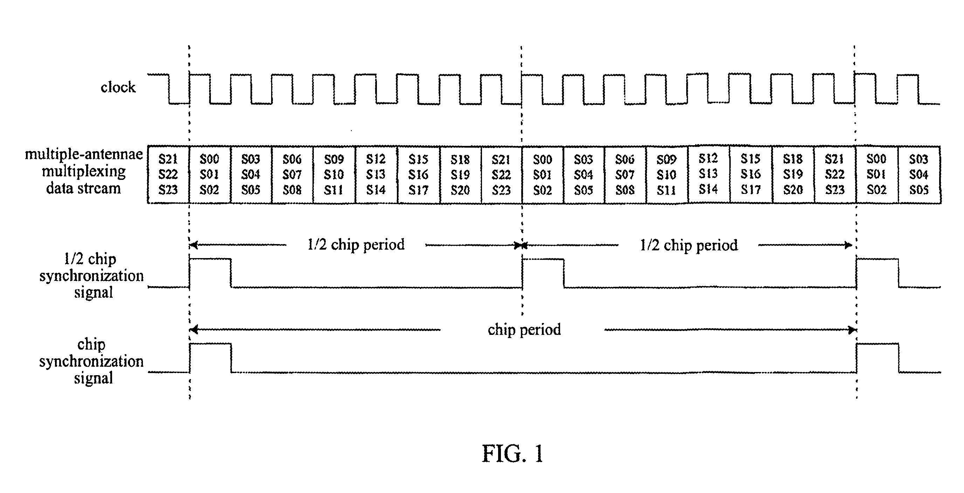

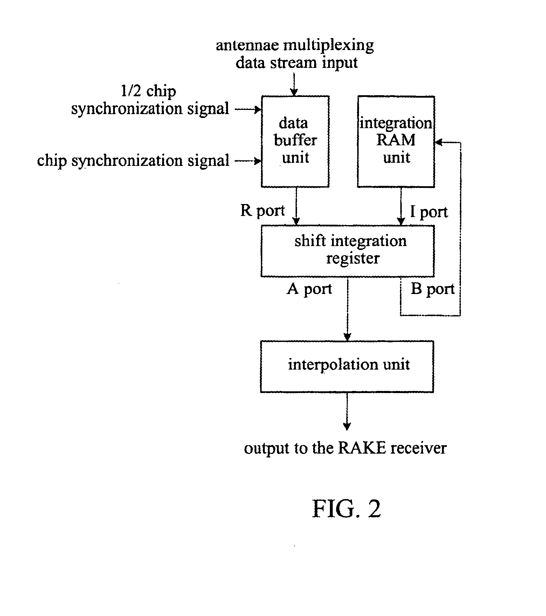

As shown in Fig.1, the way of antennae multiplexing combination for transmitting to the RAKE receiver at the WCDMA baseband antennae interface is presented in the present invention. In the present invention, on basis of the feature of the multiple-antennae sample multiplexing structure output at the baseband antennae interface, an implementing circuit for a multiple-antennae multiplexing interpolation device for improving the accuracy of the antennae sample is provided in combination with the baseband interpolation algorithm, as shown in Fig.2. In the present invention, the processing requirement of various antennae data stream combination ways can be satisfied by adjusting slightly the hardware implementation structure in each function unit in Fig.2.

The multiple-antennae multiplexing interpolation device of the present invention shown in fig.2 consists of 4 function units: a data buffer unit, an integration RAM unit, a shift integration register group, and an interpolation unit. Wherein, the main function of the data buffer unit is to buffer the multiple-antennae data stream at the antennae interface, and decompose the multiple-antennae data stream into single antennae data streams under the control of the 1/2 chip synchronization signal and the chip synchronization signal input from outside, meanwhile, the data buffer unit gathers the antennae sample point received by each antenna during one chip period to transmit to the inside logic to process.

The input of the data buffer unit is the multiple-antennae multiplexing data stream, the chip synchronization signal and 1/2 chip synchronization data stream output at the antennae interface, the data stream output from the data buffer unit to the R port of the shift integration register group is the multiple samples collected by the single antennae during one chip period.

The main function of the integration RAM unit is to buffer the antennae samples collected by each antenna during several chip periods in its inner RAM at the different addresses in term of the number of antennae under the control of chip synchronization signal, and help the shift integration register group to complete the shift operation. The input of the integration RAM unit is connected to the B port output of the shift integration register group, and its output is connected to the I port input of the shift integration register group.

The main function of the shift integration register group is to receive multiple antennae samples collected by the single antennae during one chip period output by said data buffer unit in current chip period and piece them together with the antennae samples collected during several previous chip periods of this antenna buffered in the integration RAM unit to obtain the data structure the interpolation needs; meanwhile, the shift integration register group helps the integration RAM unit to buffer the sample data received from R port at the address unit corresponding to the integration RAM through B port. The R port input of the shift integration register group is connected to the output of the data buffer unit, and its I port input is connected to the output of the integration RAM unit. The A port output of the shift integration register group is connected to the input of the interpolation, and its B port output is connected to the input of the integration RAM unit.

The main function of the interpolation unit is to interpolate the antennae samples collected by the single antennae to get the specified accuracy according to WCDMA baseband interpolation algorithm to satisfy the requirement of the back end RAKE receiver for accuracy of the input sample data. The input of the integration unit is connected to the A port output of the shift integration register group, and its output is connected to the input of the RAKE receiver.

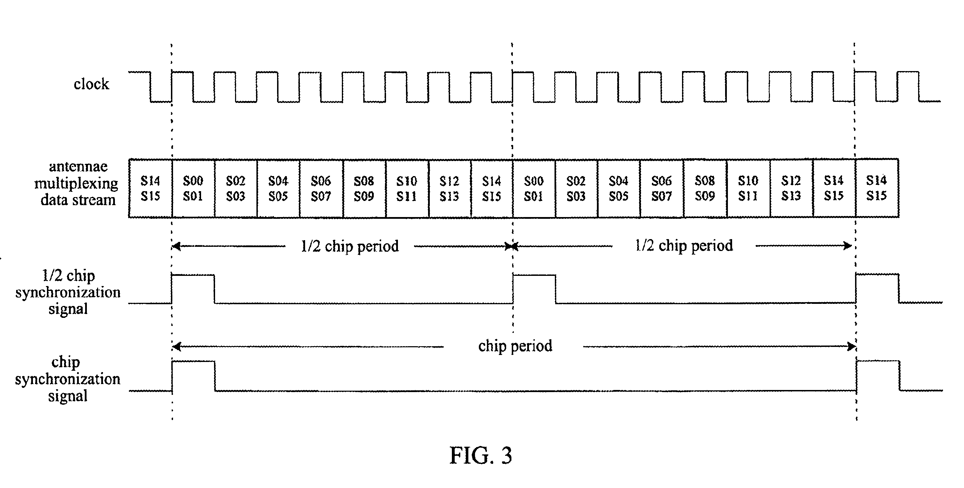

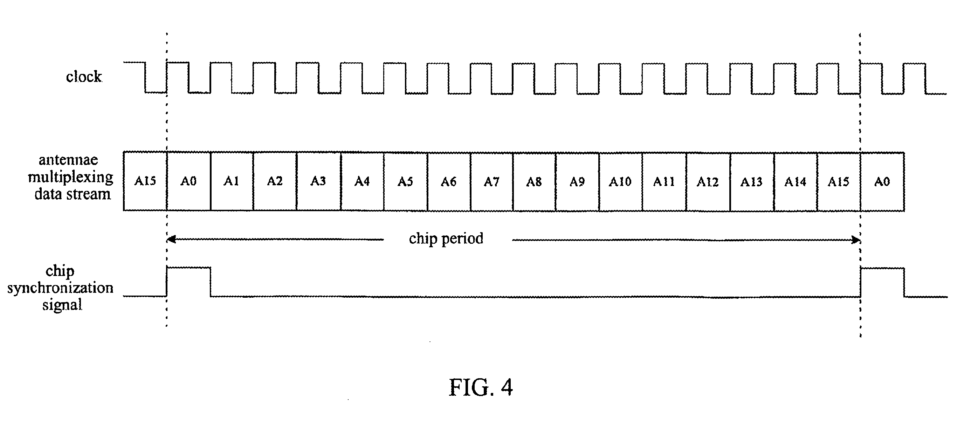

The device of the present invention is suitable for the format conversion of the antennae demultiplexing and the conversion of sampling accuracy from baseband antennae interface to the RAKE receiver. Since there are various kinds of antennae multiplexing formats output by the baseband antennae interface, for different antennae multiplexing formats, there are slight differences in the specified hardware implementation in the device of the present invention. In the following, the specified embodiment of the device of the present invention will be described on basis of the sequence of the input signals of the multiple-antennae multiplexing interpolation device shown in Fig.3 and sequence of the output signals of the multiple-antennae multiplexing interpolation device shown in Fig.4.

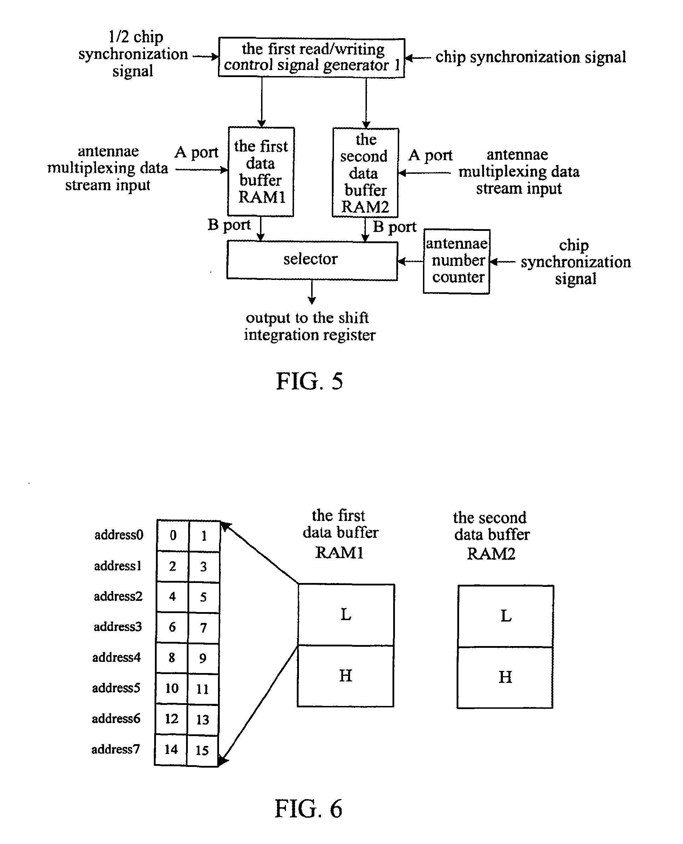

In the hardware implementation structure diagram of the multiple-antennae multiplexing interpolation device shown in Fig.2, said data buffer unit is the main function unit for antennae demultiplexing , its hardware implementation is shown in Fig.5, which consists of 5 function units: a first data buffer RAM1, a second data buffer RAM2, a first read/ writing control signal generator 1, an antennae number counter, and a selector, wherein the structure blocks of the first buffer RAM1 and the second data buffer RAM2 are shown in Fig.6.

The first data buffer RAM1 and the second data buffer RAM2 both consists of two separate double-port RAMs, and B port of each RAM is only for reading and its A port is only for writing. The width of each RAM is of 32 bits, the depth is of 16 bits, wherein the lower 8 address units form an L area, and the higher 8 address units form an H area. When the system works, in the first data buffer RAM1, the received multiple-antennae multiplexing sample is buffered into the L area at the corresponding address under the control of the first read/writing control signal generator 1, and one sample of 16 antennas is saved at 8 addresses of the first data buffer RAM1 with the period being 1/2 chip, the sample data of 2 antennas is buffered at each address within one clock period; another sample of 16 antennas is buffered into the L area of the second data buffer RAM2 during next 1/2 chip period; a further sample of 16 antennas is written into the H area of the first data buffer RAM1 during the third 1/2 chip period; another sample of 16 antennas is written into the H area of the second data buffer RAM2 during the fourth 1/2 chip period. Then, in the following time, with the period being 1/2 chip, the multiple-antennae sample data stream transmitted from the baseband antennae interface with the format of Fig.3 is buffered continuously and repeatedly in terms of the order that, firstly, the L area of the first data buffer RAM1 is written; secondly, the L area of the second data buffer RAM2 is written; then, the H area of the first data buffer RAM1 is written; then, the H area of the second data buffer RAM2 is written.

The first data buffer RAM1 and the second data buffer RAM2 output the data at the address unit in their own H areas or L areas to the selector with the period being the chip under the control of the first read/writing control signal generator. The read operation of each RAM is only available in the even clock during the 16 clocks in one chip period, and the read data bus keeps in holdover state during the remaining time. The read operation and the writing operation are of typical Ping-Pong way, that is to say, when the writing operation is initiated for the L area of the first data buffer RAM1 or the second data buffer RAM2 at the baseband antennae interface, the read operation of the first data buffer RAM1 and the second data buffer RAM2 becomes available for the H areas of both RAMs; when the writing operation is initiated for the H area of the first data buffer RAM1 or the second data buffer RAM2 at the baseband antennae interface, the read operation of the first data buffer RAM1 and the second data buffer RAM2 becomes available for the L areas of both RAMs.

The A port data inputs of the first data buffer RAM1 and the second data buffer RAM2 are connected to the outside data input bus of the multiple-antennae multiplexing interpolation device at the same time. The control signals such as the writing control signal, chip select signal, and the address bus of the A port are sent to the output of the first read/writing control signal generator 1; the output data bus of the B port is connected to the input of the selector, and the writing control signal of the B port is sent to the output of the first read/writing control signal generator 1.

The main function of the first read/writing control signal generator 1 is to generate the read/writing control signals for the A port and the B port of the first data buffer RAM1 and the second data buffer RAM2 according to the read/writing operation mode of the first data buffer RAM1 and the second data buffer RAM2 under the control of the 1/2 chip synchronization signal and the chip synchronization signal. The input of the first read/writing signal generator 1 is the 1/2 chip synchronization signal and the chip synchronization signal output at the baseband antennae interface, the generated read/writing control signal is sent to corresponding RAM ports of the first data buffer RAM1 and the second data buffer RAM2.

The antennae number counter is a counter of 16 bits. The antennae number counter is reset as zero when detecting the chip synchronization signal being valid, and is rolled over with the clock being the period. The input of the antennae number counter is the chip synchronization signal output at the baseband antennae interface, and its output is connected the input of the selector.

The main function of the selector is to, according to the counting result of the antennae number counter, select all the samples sampled by the single antennae during one chip period from the multiple-antennae multiplexing data stream read from the first data buffer RAM1 and the second data buffer RAM2, and piece them together to output. The input of the selector is the output of the antennae number, and the read data bus of the first data buffer RAM1 and the second data buffer RAM2; the output of the selector is used as the output of the data buffer unit to connect to the R port input of the shift integration register group.

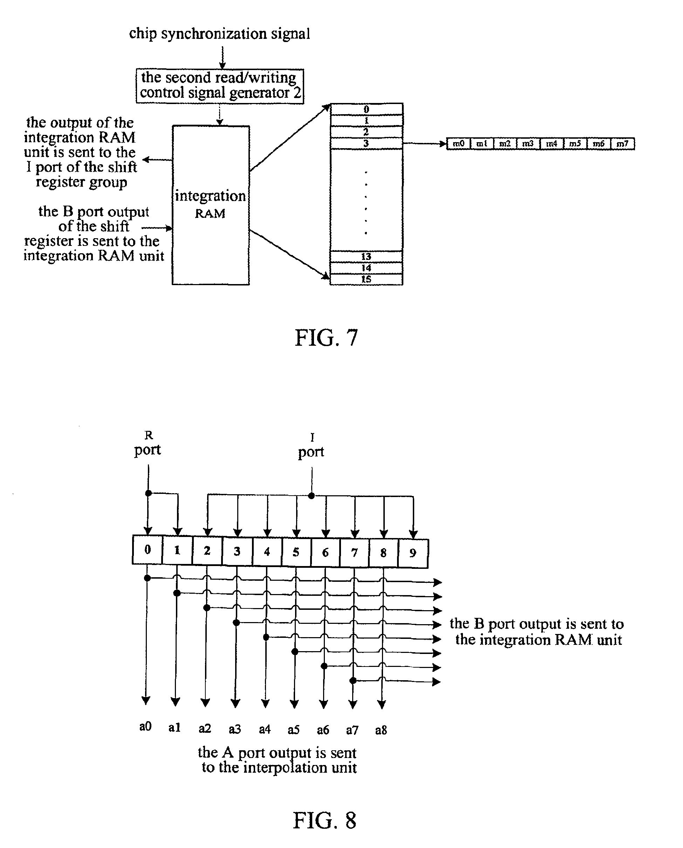

The main function of the integration unit in this device is to combine the sample data collected by each antenna during several chip periods after demultiplexing, and the sample data is buffered into its inner integration RAM in terms of the number of the antennae, meanwhile, the integration RAM unit helps the shift integration register group to complete the shift operation. The hardware implementation block of the integration RAM unit is shown in fig.7, which mainly comprises the integration RAM and the second read/write control signal generator 2, wherein the integration RAM unit is a double-port RAM, the feature of the port is that the A port is only for read, and the B port is for writing, the width is of 128 bits, the depth is of 16 bits.

When the system works, under the control of the second read/writing control signal generator 2, the buffered data of each in the integration RAM unit is read out in turn from the first clock of each chip period through B port, the data of one antenna is read out in each clock; and after delaying for one clock period at the A port regarding to the B port, the data output from the B port of the shift integration register group is written at the same address of the integration RAM unit through A port. The writing data bus of the A port of the integration RAM unit is connected to the B output port of the shift integration register group, the read data bus of the B port of the integration RAM unit is connected to the I input port of the shift integration register group, and the control signals such as the read/writing enable signal, the chip select signal, the address signal of the A port and the B port of the integration RAM unit are sent to the output port of the second read/writing control signal generator 2.

The main function of the second read/writing control generator 2 is to generate the corresponding control signals such as the read/writing enable signal, the chip select signal, the address signal according to the read/writing operation mode of the integration RAM unit under the control the chip synchronization signal, the input of the second read/writing control generator is the chip synchronization signal sent through baseband antennae port, and its output is connected to the control port of the corresponding port of the integration RAM unit.

The main function of the shift register group in the device of the present invention is to receive multiple antennae samples collected by the single antennae during one chip period output by said data buffer unit in current chip period, and piece them together with the antennae samples collected during several previous chip periods of this antennae buffered in the integration RAM unit to get the data structure that the interpolation needs; meanwhile, help the integration RAM unit to buffer the sample data received from B port at the address unit corresponding to the integration RAM through B port.

Fig. 8 is the hardware implementation block diagram of the shift integration register group in the embodiment of the invention. The shift register group includes a group of register units, each can receive a sample transmitted from outside. Wherein the R port of the shift register group is connected to the output of the data buffer unit, the B port outputs of the first data buffer RAM1 and the second data buffer RAM2 of the data buffer unit is connected to the register unit 1 and register unit 0 through R port. The I port of the shift register group is connected to the output of the integration RAM unit, each sample read out by the integration RAM unit through I port is buffered into the register units 2 to 9 of the shift register group. The B port output of the shift register group is connected to the input of the integration unit, and it's A port output is connected to the input of the interpolation unit.

The interpolation unit is a function unit to implement the baseband interpolation algorithm in the device of the present invention, and the algorithm used is a general baseband interpolation algorithm currently. The implementation process of the algorithm is described with the following formulas:

$$c(k) = \sum_{m=0}^{7} b\left(m + \lfloor k/4 \rfloor\right) p_0(m), \, k = 0,4,8,12,...$$

$$c(k) = \sum_{m=0}^{7} b\left(m + \lfloor k/4 \rfloor\right) p_1(m), \, k = 1,5,9,13,...$$

$$c(k) = \sum_{m=0}^{7} b\left(m + \lfloor k/4 \rfloor\right) p_2(m), \, k = 2,6,10,14,...$$

$$c(k) = \sum_{m=0}^{7} b\left(m + \lfloor k/4 \rfloor\right) p_3(m), \, k = 3,5,11,13,...$$

In the above, $p_0$, $p_1$, $p_2$ and $p_3$ are the interpolation coefficients of the 4 phases received by the antennae multiplexing device from outside, each of which consists of 8 coefficients, as shown in the following table:

| interpolation phase | Interpolation coefficient | | | | | | | |
|---|---|---|---|---|---|---|---|---|
| P0 | P0(0) | P0(1) | P0(2) | P0(3) | P0(4) | P0(5) | P0(6) | P0(7) |
| P1 | P1(0) | P1(1) | P1(2) | P1(3) | P1(4) | P1(5) | P1(6) | P1(7) |
| P2 | P2(0) | P2(1) | P2(2) | P2(3) | P2(4) | P2(5) | P2(6) | P2(7) |
| P3 | P3(0) | P3(1) | P3(2) | P3(3) | P3(4) | P3(5) | P3(6) | P3(7) |

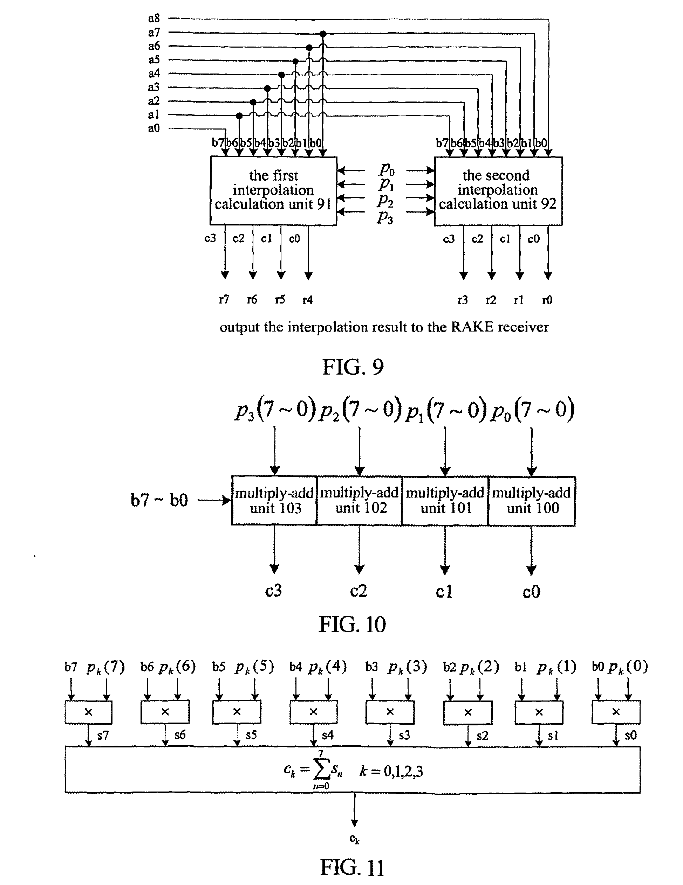

The hardware implementation block of the interpolation is shown in Fig.9. The interpolation unit consists of two same interpolation calculation units, i.e., the first interpolation calculation unit 91 and the second interpolation calculation unit 92. The main function of the interpolation calculation unit is to multiply the 8 antennae samples b0 to b7 input from outside by the individual 8 interpolation coefficients of the 4 interpolation phases correspondingly, and accumulate the product to get the interpolation result.

Each interpolation calculation unit includes 4 multiply-add units, as shown in Fig.10, the hardware structure of a single multiply-add unit is shown in Fig.11. Since each generates 4 interpolation results corresponding to the interpolation phase, the interpolation unit can generate 8 interpolation results at the same time for each time to be the final result of the interpolation algorithm of the hardware implementation to output. One input port of the interpolation unit is connected to the A port output of the shift integration register group, and another input port is connected with 4 phase interpolation coefficients; the output ports r7 to r0 are connected to the input port of the baseband RAKE receiver.

The input ports b7 to b0 of the first interpolation calculation unit 91 are connected to the input ports a0 to a7 of the interpolation unit, ant the output ports c3 to c0 are connected to the output ports r7 to r4 of the interpolation unit; the input ports b7 to b0 of the second interpolation calculation unit 92 are connected to the input ports a1 to a8 of the interpolation unit, ant the output ports c3 to c0 are connected to the output ports r3 to r0 of the interpolation unit. Each multiply-add unit inside the interpolation calculation unit has 2 input port buses and one output port bus, wherein one input port bus is connected to the antennae sample inputs b7 to b0 of the interpolation calculation unit, another input port bus is connected to the 8 interpolation phase inputs of the interpolation phase $p_k$, wherein k=0, 1, 2, 3; the output port bus of the multiply-add unit used as one output bus of the interpolation calculation unit is connected to the output port $C_k$ of the interpolation calculation unit, wherein k=0, 1, 2, 3. At the output of the interpolation device, the output of each multiply-add unit is used as the final calculation result of the interpolation calculation to output the antennae samples with high accuracy to the RAKE receiver through the output port of the interpolation unit, so as to satisfy the requirement of the RAKE receiver for the antennae sample accuracy.

It should be understood that although the embodiments of the present invention are described in detail above, it is not intended to limit the protection scope of the present invention, and the protection scope of the present invention is specified by the attached claims.

**Industrial Applicability**

From the description of the operation theory and the hardware implementation structure of the device of the present invention, the advantages of the device is as follows:

In the device of the present invention, the antennae sample data is processed in real time, the strict performance requirement for sampling rate of the baseband antennae interface to satisfy the requirement of the RAKE receiver for the sample accuracy is avoided, and it is avoided that a large amount of storage is consumed by the baseband antennae interface to buffer the data, and thus a large amount of storage resources are saved.

Meanwhile, the device of the present invention can be adjusted flexibly according to the way of the different antennae data stream multiplexing, and it is suitable for the case that various antennae multiplexing data streams are output at the baseband antennae interface without affecting the RAKE receiver.

After the device of the present invention is adjusted simply, the interpolation algorithms with various accuracies can be realized, and the antennae data stream with high accuracy is output. Under the condition of satisfying the requirement of the system performance, according to its practical requirement, each processing subunit of the back-end RAKE receiver can sample simply on basis of the accuracy of the data output by the device, adjust the accuracy of the sample flexibly, so as to save the resources.

**Claims**

1.  A multiple-antennae multiplexing interpolation device, connected between a WCDMA baseband antennae interface and a RAKE receiver, comprising a data buffer unit, an integration RAM unit, a shift integration register group, and an interpolation unit; wherein:

    said data buffer unit is adapted to buffer a multiple-antennae multiplexing data stream of the antennae interface, decompose the multiple-antennae multiplexing data stream into a single antennae data stream under control of a 1/2 chip synchronization signal and a chip synchronization signal input from outside, and output the single antennae data stream to a port R of the shift integration register group, and the single antenna data stream consists of multiple samples collected by the single antenna during one chip period;
    said integration RAM unit is adapted to buffer the antennae samples collected by each antenna during several chip periods in its inner RAM at different addresses in terms of the number of antennae under control of the chip synchronization signal, and help the shift integration register group to complete shift operation;
    said shift integration register group is adapted to receive multiple antennae samples collected by the single antenna during one chip period output by said data buffer unit in current chip period, and piece said multiple antennae samples together with the antennae samples collected during several previous chip periods by this single antennae buffered in the integration RAM unit;
    said interpolation unit is adapted to interpolate the antennae samples collected by the single antenna to get a specified accuracy according to a WCDMA baseband interpolation algorithm so as to satisfy requirement of a back end RAKE receiver for the accuracy of input sample data.

**2.** The device of claim 1, wherein said data buffer unit gathers individual antenna samples collected by each antenna during one chip period and send them to said shift integration register group to piece these antennae samples together;

an input of said integration RAM unit is connected to an output port B of said shift integration register group, while an output of said integration RAM unit is connected to an input port I of said shift integration register group;

an input of said interpolation unit is connected to an output port A of said shift integration register group; an output of said interpolation unit is connected to an input of said RAKE receiver.

**3.** The device of claim 2, wherein said data buffer unit includes a first data buffer, a second data buffer, a first read/writing control signal generator, an antennae number counter, and a selector, wherein:

the first data buffer and the second data buffer consist of two separate double-port RAMs respectively, port B of each RAM being only for reading and port A being only for writing;

the first read/writing control signal generator is adapted to control read/writing H operation of the first data buffer and the second data buffer;

the antenna number counter is adapted to be reset as zero and to be rolled over with a clock being a period once the chip synchronization signal is detected to be valid;

the selector is adapted to, according to a counting result of the antennae number counter, select all samples sampled by the single antennae during one chip period from the multiple-antennae multiplexing data stream read from the first data buffer and the second data buffer, and piece the all samples together to output.

**4.** The device of claim 3, wherein a width of the RAM is of 32 bits, a depth of the RAM is of 16 bits, wherein lower 8 address units form an L area, and higher 8 address units form an H area.

**Patentansprüche**

**1.** Mehrfach-Antennen-Multiplexing-Interpolationsvorrichtung, angeschlossen zwischen einer WCDMA-Basisband-Antennenschnittstelle und einem RAKE-Empfänger, umfassend eine Datenpuffereinheit, eine Integrations-RAM-Einheit, eine Schiebeintegrationsregistergruppe und eine Interpolationseinheit, wobei:

die Datenpuffereinheit geeignet ist, einen Mehrfach-Antennen-Multiplexing-Datenstrom der Antennenschnittstelle zu puffern, den Mehrfach-Antennen-Multiplexing-Datenstrom in einen Einfach-Antennen-Datenstrom zu zerlegen, unter Steuerung eines 1/2-Chip-Synchronisationssignals und eines Chip-Synchronisationssignals, die von außen eingegeben werden, und den Einfach-Antennen-Datenstrom an einen Anschluss R der Schiebeintegrationsregistergruppe auszugeben, wobei der Einfach-Antennen-Datenstrom aus mehrfachen Abtastungen besteht, die durch die einzelne Antenne während einer Chip-Periode gesammelt sind;

die Integrations-RAM-Einheit geeignet ist, die Antennenabtastungen, die durch jede Antenne während mehrerer Chip-Perioden in ihrem internen RAM an unterschiedlichen Adressen gesammelt sind, hinsichtlich der Anzahl der Antennen unter der Steuerung des Chip-Synchronisationssignals zu puffern sowie die Schiebeintegrationsregistergruppe bei der Durchführung des Schiebevorgangs zu unterstützen;

die Schiebeintegrationsregistergruppe geeignet ist, vielfache Antennenabtastungen zu empfangen, die durch die einzelne Antenne während einer Chip-Periode gesammelt sind und durch die Datenpuffereinheit in der aktuellen Chip-Periode ausgegeben sind, und die vielfachen Antennenabtastungen mit den Antennenabtastungen zusammenzusetzen, die während mehrerer vorheriger Chip-Perioden durch diese einzelne Antenne gesammelt sind und in der Integrations-RAM-Einheit gepuffert sind;

die Interpolationseinheit geeignet ist, die durch die einzelne Antenne gesammelten Antennenabtastungen zu interpolieren, um eine vorgegebene Genauigkeit gemäß einem WCDMA-Basisband-Interpolationsalgorithmus zu erreichen, um die Anforderungen eines Back-End-RAKE-Empfängers zur Genauigkeit von eingegebenen Abtastungsdaten zu erfüllen.

**2.** Vorrichtung nach Anspruch 1, wobei: die Datenpuffereinheit einzelne Antennenabtastungen erfasst, die durch jede Antenne während einer Chip-Periode gesammelt sind, und an die Schiebeintegrationsregistergruppe sendet, um diese Antennenabtastungen zusammenzusetzen;

ein Eingang der Integrations-RAM-Einheit an einen Ausgangsanschluss B der Schiebeintegrationsregistergruppe angeschlossen ist, während ein Ausgang der Integrations-RAM-Einheit an einen Eingangsanschluss I der Schiebeintegrationsregistergruppe angeschlossen ist;

ein Eingang der Interpolationseinheit mit einem Ausgangsanschluss A der Schiebeintegrationsregistergruppe angeschlossen ist; ein Ausgang der Interpolationseinheit an einen Eingang des RAKE-Empfängers angeschlossen ist.

**3.** Vorrichtung nach Anspruch 2, wobei die Datenpuffereinheit einen ersten Datenpuffer, einen zweiten Datenpuffer, einen ersten Lese-/Schreib-Steuersignalgenerator, einen Antennenzahlzähler und einen Selektor enthält, wobei:

der erste Datenpuffer bzw. der zweite Datenpuffer aus zwei getrennten Doppelanschluss-RAMs bestehen, wobei Anschluss B jedes RAMs nur zum Lesen und Anschluss A nur zum Schreiben dient;
der erste Lese-/Schreib-Steuersignalgenerator geeignet ist, den Lese-/Schreibvorgang des ersten Datenpuffers und des zweiten Datenpuffers zu steuern;
der Antennenzahlzähler geeignet ist, auf Null zurückgesetzt zu werden und mit einem Takt weitergeschaltet zu werden, der eine Periode ausmacht, sobald erkannt ist, dass das Chip-Synchronisationssignal gültig ist;
der Selektor geeignet ist, gemäß einem Zählergebnis des Antennenzahlzählers alle Abtastungen zu wählen, die durch die einzelne Antenne während einer Chip-Periode aus dem Mehrfach-Antennen-Multiplexing-Datenstrom abgetastet sind, der aus dem ersten Datenpuffer und dem zweiten Datenpuffer ausgelesen ist, und alle Abtastungen zum Ausgeben zusammenzusetzen.

**4.** Vorrichtung nach Anspruch 3, wobei eine Breite des RAMs 32 Bits beträgt, eine Tiefe des RAMs 16 Bits beträgt, wobei untere 8 Adresseneinheiten einen L-Bereich bilden und obere 8 Adresseneinheiten einen H-Bereich bilden.

## Revendications

**1.** Dispositif d'interpolation à multiplexage multi-antennes connecté entre une interface d'antennes de bande de base WCDMA et un récepteur en râteau (RAKE), comprenant une unité de tampon de données, une unité de mémoire vive à intégration, un groupe de registre d'intégration à décalage et une unité d'interpolation ; dans lequel :

ladite unité de tampon de données est adoptée pour mettre en mémoire tampon un flux adopté de données de multiplexage multi-antennes de l'interface d'antenne, décomposer le flux de données de multiplexage multi-antennes en un flux unique de données d'antennes sous la commande d'un 1/2 signal de synchronisation de puce et d'une entrée de signal de synchronisation de puce depuis l'extérieur et émettre le flux de données d'antenne unique vers un port R du groupe de registre d'intégration à décalage, et le flux de données d'antenne unique consiste en une multitude d'échantillons collectés par l'antenne unique pendant une période d'élément de code ;
ladite unité de mémoire vive à intégration est adoptée pour mettre en mémoire tampon les échantillons d'antennes collectés par chaque antenne durant plusieurs périodes d'élément de code dans sa mémoire vive interne, à des adresses différentes en termes de nombre d'antennes sous la commande du signal de synchronisation de puce, et aider le groupe de registre d'intégration à décalage à effectuer l'opération de décalage ;
ledit groupe de registre d'intégration à décalage est adopté pour recevoir une multitude d'échantillons d'antennes collectés par l'antenne unique durant une période d'élément de code, émis par ladite unité de tampon de données durant la période d'élément de code actuelle, et rassembler lesdits multiples échantillons d'antennes avec les échantillons d'antennes collectés durant plusieurs périodes d'élément de code précédentes par cette antenne unique, mis en mémoire tampon dans l'unité de mémoire vive à intégration ;
ladite unité d'interpolation est adoptée pour interpoler les échantillons d'antennes collectés par l'antenne unique afin d'obtenir une précision spécifiée selon un algorithme d'interpolation en bande de base WCDMA, de manière à répondre à l'exigence d'un récepteur en râteau (RAKE) d'arrière-plan pour la précision des données-échantillons d'entrée.

**2.** Dispositif selon la revendication 1, dans lequel ladite unité de tampon de données rassemble des échantillons d'antennes individuels collectés par chaque antenne durant une période d'élément de code et les envoie audit groupe de registre d'intégration à décalage pour regrouper ces échantillons d'antennes ;
une entrée de ladite unité de mémoire vive d'intégration est connectée à un port de sortie B dudit groupe de registre d'intégration à décalage, alors qu'une sortie de ladite unité de mémoire vive d'intégration est connectée à un port d'entrée I dudit groupe de registre d'intégration à décalage ;
une entrée de ladite unité d'interpolation est connectée à un port de sortie A dudit groupe de registre d'intégration à décalage ; une sortie de ladite unité d'interpolation est connectée à une entrée dudit récepteur en râteau (RAKE).

**3.** Dispositif selon la revendication 2, dans lequel ladite unité de tampon de données comprend un premier tampon de données, un second tampon de données, un premier générateur de signaux de commande de lecture/écriture, un compteur de nombre d'antennes et un sélecteur, dans lequel :

le premier tampon de données et le second tampon de données consistent en deux mémoires vives à double port séparées respectives, le port B de chaque de chaque mémoire vive étant seulement pour la lecture et le port A étant seulement pour l'écriture :

le premier générateur de signaux de commande de lecture/écriture est adopté pour commander les opérations de lecture/écriture du premier tampon de données et du second tampon de données ;

le compteur de nombre d'antennes est adopté pour être remis à zéro et s'incrémenter à une cadence correspondant à une période une fois qu'il est détecté que le signal de synchronisation de puce est valable ;

le sélecteur est adopté pour, selon un résultat de comptage du compteur de nombre d'antennes, sélectionner tous les échantillons échantillonnés par l'antenne unique durant une période d'élément de code depuis le flux de données de multiplexage multi-antennes lu depuis le premier tampon de données et le second tampon de données, et rassembler tous les échantillons en vue de la sortie.

4. Dispositif selon la revendication 3, dans lequel une largeur de la mémoire vive est de 32 bits, une profondeur de la mémoire vive est de 16 bits, dans lequel 8 unités d'adresse relativement basses forment une zone L et 8 unités d'adresse relativement hautes forment une zone H.

EP 2 023 495 B1

clock

multiple-antennae
multiplexing
data stream

| S21 S22 S23 | S00 S01 S02 | S03 S04 S05 | S06 S07 S08 | S09 S10 S11 | S12 S13 S14 | S15 S16 S17 | S18 S19 S20 | S21 S22 S23 | S00 S01 S02 | S03 S04 S05 | S06 S07 S08 | S09 S10 S11 | S12 S13 S14 | S15 S16 S17 | S18 S19 S20 | S21 S22 S23 | S00 S01 S02 | S03 S04 S05 |

1/2 chip
synchronization
signal

|◄——————— 1/2 chip period ———————►|◄——————— 1/2 chip period ———————►|

chip
synchronization
signal

|◄————————————————— chip period —————————————————►|

FIG. 1

antennae multiplexing
data stream input

1/2 chip
synchronization signal →

chip synchronization signal →

data
buffer
unit

integration
RAM
unit

R port

I port

shift integration
register

A port

B port

interpolation unit

output to the RAKE receiver

FIG. 2

FIG. 3

FIG. 4

1/2 chip synchronization signal → the first read/writing control signal generator 1 ← chip synchronization signal

antennae multiplexing data stream input — A port → the first data buffer RAM1

the second data buffer RAM2 ← A port — antennae multiplexing data stream input

B port ↓     B port ↓

selector ← antennae number counter ← chip synchronization signal

output to the shift integration register

**FIG. 5**

| | | |
|---|---|---|
| address0 | 0 | 1 |
| address1 | 2 | 3 |
| address2 | 4 | 5 |
| address3 | 6 | 7 |
| address4 | 8 | 9 |
| address5 | 10 | 11 |
| address6 | 12 | 13 |
| address7 | 14 | 15 |

the first data buffer RAM1

| L |
|---|
| H |

the second data buffer RAM2

| L |
|---|
| H |

**FIG. 6**

chip synchronization signal

the second read/writing
control signal generator 2

the output of the
integration RAM
unit is sent to the
I port of the shift
register group

integration
RAM

the B port output
of the shift
register is sent to the
integration RAM unit

| 0 |
| 1 |
| 2 |
| 3 |

.
.
.
.
.

| 13 |
| 14 |
| 15 |

| m0 | m1 | m2 | m3 | m4 | m5 | m6 | m7 |

**FIG. 7**

R
port

I
port

| 0 | 1 | 2 | 3 | 4 | 5 | 6 | 7 | 8 | 9 |

the B port output is sent to
the integration RAM unit

a0   a1   a2   a3   a4   a5   a6   a7   a8

the A port output is sent
to the interpolation unit

**FIG. 8**

FIG. 9

output the interpolation result to the RAKE receiver

FIG. 10

$$p_3(7 \sim 0)\,p_2(7 \sim 0)\,p_1(7 \sim 0)\,p_0(7 \sim 0)$$

$$c_k = \sum_{n=0}^{7} S_n \qquad k = 0,1,2,3$$

FIG. 11

**EP 2 023 495 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1376333